# EUROPEAN PATENT APPLICATION

(11) **EP 1 431 895 A1**
(43) Date of publication of application: **23.06.2004**
(21) Application number: 03011350.0
(22) Date of filing: 19.05.2003
(51) Int. Cl.: G06F 17/60

(54) **Method and apparatus for receiving, storing and redeeming electronic coupons with a portable device**

(30) Priority: 19.12.2002 US 323315
(71) Applicant: Weinblatt, Lee S., Teaneck, New Jersey 07666 (US)
(72) Inventor: Weinblatt, Lee S., Teaneck, NJ 07666 (US); Langer, Thomas, Teaneck, NJ 07666 (US)
(74) Representative: Epping Hermann & Fischer

(57) **Abstract**

Purchase incentives are provided to consumers in the form of electronically-displayed reward coupons. No paper and ink is required. The consumer can make a real time selection of a coupon related to a product in a commercial being shown on television, for example. A code transmitted with that commercial is stored if the consumer makes a selection, and that code is used to retrieve coupon display data from a set of pre-stored coupons. The retrieved coupon data is displayed on a portable device such as a personal digital assistant (PDA). The displayed coupon is process by the merchant, such as by scanning a bar code displayed by the PDA with the coupon.

## Description

This invention is directed to an improved technique for providing incentives to consumers and, in particular, for generating and using electronically-displayed reward coupons.

Various incentives are provided to consumers for purchasing products and/or services. One well-known type of incentive is commonly called a reward coupon, or discount coupon, or simply coupon. Coupons are printed on paper and distributed to consumers by mail, stacked in store displays, handed out by cashiers, inserted into newspapers and magazines, printed out on the back of cashier receipts, and so on. It has been estimated that 248 billion coupons are distributed annually. Of this staggering number, a paltry 1.8% is redeemed. The remaining 98.2% goes to waste. Consequently, this printed-coupon-based consumer incentive approach is extremely wasteful and inefficient when one considers the amount of paper and ink involved, the mailing costs, the labor costs, etc. In addition, all that ink and paper has an environmental impact in terms of trees unnecessarily chopped down and refuse that must be put somewhere. Furthermore, the processing of redeemed paper coupons is burdensome for the merchants in that it requires manual handling, shipment and storage of large quantities of paper.

A primary cause of this high level of waste and inefficient use of resources, as evidenced by the minuscule coupon redemption rate, is its dependence on the shotgun approach of sending massive quantities of coupons to everyone. Improved redemption rates are achieved with other approaches, such as those in which a coupon is printed only upon request by the consumer. For example, coupons can be printed out at gas station pumps while purchasing gasoline. 25-40% of those coupons are redeemed. Nevertheless, this approach still involves considerable waste for the coupons that are not redeemed, and even those coupons that are redeemed are printed on paper which is eventually discarded. Also, coupons made available at gas pumps have a more limited exposure to consumers than if they were more generally available, so many consumers who might be interested in the product are not reached, e.g. non-drivers, those who buy another brand of gasoline, etc.

More recently, coupons have been made available over the Internet. Upon viewing a particular product on a personal computer, for example, the consumer is informed that a coupon can be printed and redeemed for a particular incentive reward. One technique for using the Internet in this way is disclosed in SN 60/273,745. The invention disclosed therein will be described in some detail because it involves a related application and also because its contents pertain to the present invention. The invention disclosed in SN 60/273,745 addresses the more general situation of when the information in a program that is broadcast contains less information than the program provider wants to provide and less than the audience member (referred to hereinafter as a "viewer" or "participant" or "consumer") is interested in obtaining. The "program" can be audio and/or video, commercial (e.g. advertisement) and/or non-commercial (e.g. an entertainment show), and is obtained as a programming signal (e.g. a television signal) from a program signal source (e.g. a television station) originated by a program provider (e.g. an advertiser). The "broadcast" of the program can be over the airwaves, cable, satellite, or any other signal transmission medium. This term also applies to playback from recording media such as audio tape, video tape, DAT, CD-ROM, and semiconductor memory. An "audience" for such program reproduction is constituted of the persons who perceive the program.

The program is "performed" by any means which result in some form of perception by human beings, the most common being video and audio. The "reproduction equipment" is any and all types of units to convert a broadcast signal into human perceptible form.

It can be readily appreciated that television ("TV") programs are restricted to a particular length due to the time period allocated to a show, and the high cost charged for broadcasting a commercial based on its duration. Many illustrations can be given that demonstrate the need to provide supplementary materials for the show and/or commercial. For example, consumers may seek more details regarding a news item. Likewise, a retailer could make available as part of a commercial an incentive reward, such as discount coupons, to purchase its products.

The invention disclosed in SN 60/273,745 and 10/092,045 is embodied as an enhancement of the invention disclosed in USSN 09/519,248. In so doing, the audience detection features of the latter invention are combined to great advantage with the program-related, supplementary material capabilities of the former. USSN 09/519,248 discloses an effective approach for identifying audience members and providing viable information about them personally (e.g. their profile) and their broadcast-program-viewing behavior. Each participant is given a portable device to wear on a regular basis as an article of clothing. For example, such a portable device might be a watch for men or a bracelet for women.

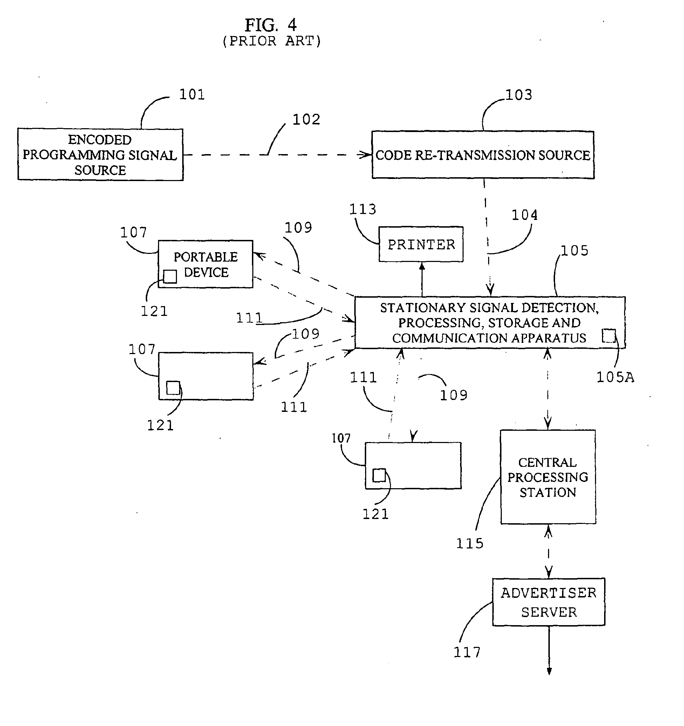

As shown in Fig. 4, an encoded signal is generated by a programming signal source 101, such as a TV broadcast station. Its output signal 102, which is a combination of the programming signal and a program code, is received by code retransmission source 103. Code retransmission source 103 can be capable of suitably reproducing the programming signal for video and/or audio performance. However, for audience surveying purposes, its key function is to detect the program code in the signal 102 received from programming signal source 101, and then to retransmit it in suitable fashion as output signal 104. For example, as disclosed in U.S. Patent No. 4,718,106, the transmitted program code is detected by a receiver and reproduced by a speaker. The speaker produces pressure waves in the air that can be detected by a microphone, for example, and with a frequency that is in what is scientifically regarded as the audible range of human hearing. Such pressure waves, or signals, are referred to as acoustic. An acoustic signal is regarded as being audible, irrespective of whether it is actually heard by a person, as long as it can be produced by a conventional speaker and detected by a conventional microphone. The audible acoustic signal is detected by a microphone and associated circuitry embodied in a portable device worn by the test participants, and data on the incidence of occurrence and/or the time of occurrence of the acoustic signal, and the program code it contains, are stored and analyzed to provide an audience survey.

The code re-transmitted by code retransmission source 103 is detected and processed by stationary apparatus 105. If a coupon is being offered, indicator 105A is activated. The indicator can be visual, audible and/or tactile (e.g. vibration). A plurality of portable devices 107 operate cooperatively with stationary apparatus 105, such as in response to query signal 109, to identify the participants in attendance and to determine whether any such participant has actuated a request for a coupon with button 121, which generates signal 111. Some coupons can be printed out immediately by printer 113. Stationary apparatus 105 is in communication with central processing station 115 to periodically upload data stored therein and to download data required for operational purposes. Finally, central processing station 115 is in communication with advertiser server 117. Data for enabling the advertiser to provide printed coupons requested by participants, such as via mail, is downloaded from central processing station 115 to advertiser server 117, and operational data is uploaded from advertiser server 117 to central processing station 115.

It is estimated that coupons which are downloaded over the Internet and then printed are redeemed at a rate of 65%. Nevertheless, this approach still involves considerable waste for the coupons that are not redeemed, and even those coupons that are redeemed are printed on paper which is eventually discarded. Also, coupons made available over the Internet have a more limited exposure to consumers than if they were more generally available, so many consumers who might be interested in the product are not reached, e.g. non-computer users, non-web surfers, etc.

One object of the invention is to provide an improved technique for providing consumers an incentive reward to purchase a product.

One other object of the invention is to provide a technique for distributing reward coupons in a way which constitutes a more efficient use of resources.

Another object of the invention is to provide consumer reward coupons without using printed paper.

A further object of the invention is to facilitate obtaining and using reward coupons by the user.

Yet another object of the invention is to facilitate handling and processing of redeemed reward coupons by merchants.

It is still another object of the present invention to prevent unauthorized redemption of an electronically generated and displayed coupon.

These and other objects are attained in accordance with one aspect of the present invention directed to a technique for producing an electronic coupon. A source is provided for producing a coupon code signal corresponding to a reward coupon. The coupon code signal is converted to coupon code display data. The coupon code display data is inputted to an electronic display device for displaying the reward coupon.

Another aspect of the present invention is directed to a technique for enabling a consumer to obtain a reward coupon while a program that has been broadcast is being performed by reproduction equipment. A program signal source broadcasts a signal that is a combination of a programming signal corresponding to the program and a coupon code signal corresponding to the reward coupon. The coupon code signal is detected from the broadcast signal, and code display data is produced from the coupon code signal. The coupon code display data is inputted to an electronic display device for displaying the reward coupon.

Yet another aspect of the present invention is directed to a technique for use by a consumer to redeem an electronic coupon in a store. The consumer utilizes a portable unit having an electronic memory, a display control circuit, and an electronic display device. Coupon code display data corresponding to a reward coupon is stored in the memory. The display control circuit is actuated to retrieve the coupon code display data from the memory and produce therewith an electronic display of the coupon on the electronic display device. The electronically displayed reward coupon is presented to a cashier at the store.

In the drawings:
Fig. 1 is a schematic block diagram of a portable unit and a base unit arranged in accordance with the invention.
Fig. 2 is a flow chart of functions performed by the coupon ID circuit of Fig. 1.
Fig. 3 depicts details of the coupon data signal.
Fig. 4 is a schematic block diagram of a prior art approach to encode a programming signal, which is useful for the present invention.

For purposes of the present invention, some of its components can be the same as or incorporated into the components of the invention described in USSN 09/519,248 in that the present invention requires, as explained below, an encoded programming signal, a base unit, a portable unit, and a central processing station. However, a description of the invention is facilitated by describing the various components independently of the overall system described in the above-mentioned related application. Nevertheless, a relationship between certain of the components of the present invention and those in the related application will be readily apparent.

Turning first to a general description of the preferred embodiment of the present invention, consumer incentives in the form of coupons are made available by a stationary base unit 1 and a portable unit 3 in operative cooperation with each other. Base unit 1 is placed within an area containing an instrument for reproducing the video and/or audio programming signal. An example would be a room with a TV. Base unit 1 is a self-contained, relatively small and unobtrusive apparatus that can be placed on a surface in the room in such a way that wireless communication between it and the other components, as described below, is not blocked. To some extent, the restrictions on its placement depend on the nature of the communication signals, with radio signals providing a higher degree of flexibility than infrared signals, for example. The installation of base unit 1 is very simple in that it must be plugged into a wall outlet socket to receive power. Also, to enable data communication with a central processing station, it is connected to a telephone line, ISDN line or cable, for example, or a wireless communication system can be used, such as satellite or cellular. Only a one time, fast, simple installation is involved that requires no retrofit of other apparatus in the house.

Alternatively, base unit 1 could have its circuitry incorporated into the electronics of the code re-transmission source. For example, the electronics could be fabricated on the semiconductor chip used to control operation of a TV and the viewing of programs on it. Such TV chips are becoming increasingly sophisticated with modern TVs being provided with added functionality approaching that of a computer.

A key feature of the invention is that coupons are not printed on paper. Instead, each coupon is derived from base unit 1 and displayed on portable unit 3. The consumer can scroll through several electronically stored coupons to display the one that is then of interest. When the consumer is, for example, at the cash register, portable unit 3, with the coupon of interest displayed on the screen, is handed to the cashier for redemption processing in a manner described in more detail below.

Portable unit 3 is preferably compact and light. It must have a display screen and preferably includes some input device, or interface, such as control buttons and/or a touch-sensitive screen, for manipulation by the consumer. A suitable device in widespread usage is a portable digital assistant, also commonly known as a PDA. Such PDAs are available from many vendors, such as Palm, Inc. For purposes of convenience and brevity in the description provided hereinbelow, portable unit 3 will be referred to as a PDA.

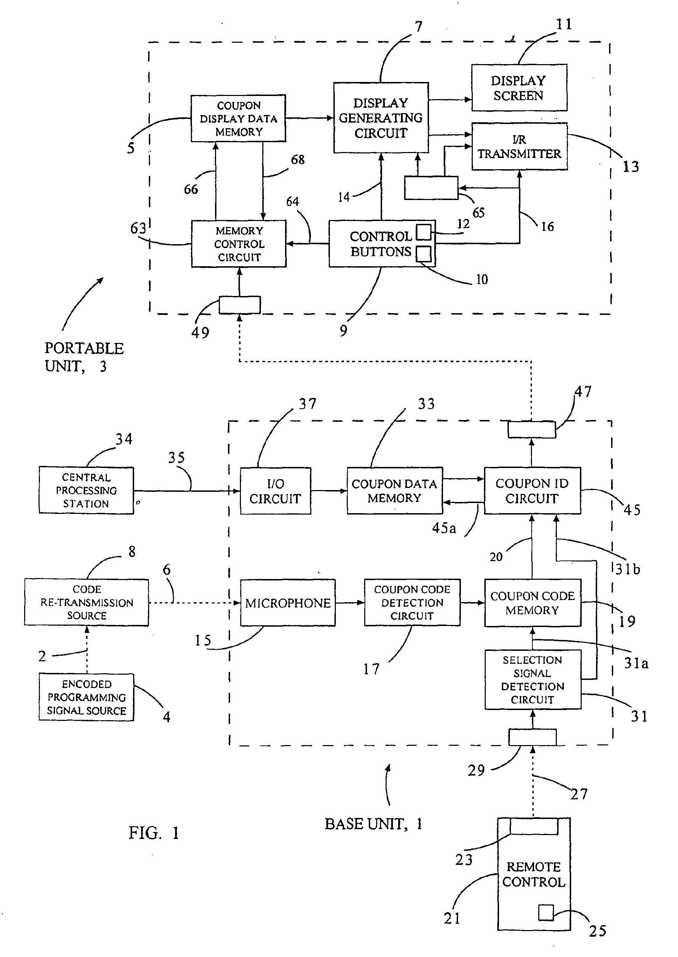

Turning now to a more specific description of the invention, PDA 3 is shown in Fig. 1 to include memory 5 for storing coupon display data. The coupon display data is provided by base unit 1 to detector 49 the output of which is inputted to memory 5 via memory control circuit 63. Circuit 63 places on its output 66 whatever is inputted to it by detector 49, unless certain conditions exist which are explained in detail below.

A display generating circuit 7 in PDA 3 retrieves from memory 5 the coupon display data designated of interest by the consumer with manipulation of input device 9 which produces output signal 14. Display screen 11 receives the output of display generating circuit 7 and displays an image of the coupon selected by the consumer.

As explained below, the coupon display data stored in memory 5 can include, in addition to the data required for displaying an image of the coupon on display screen 11, data for displaying a barcode. Thus, the barcode is displayed on screen 11 along with the coupon. In addition, an infrared (I/R) transmitter 13 is provided so that a signal corresponding to the barcode data can be emitted in response to signal 16 generated upon actuation of button 10.

When PDA 3 is presented to the cashier to redeem the coupon, the cashier will use a barcode scanner to scan the barcode displayed on screen 11 which enters the appropriate coupon-related redemption data into the merchant's system. Alternatively, button 10 can be actuated so that the barcode signal is emitted to a suitable detector on the cash register via I/R transmitter 13. Of course, various other approaches are available to handle the redemption of a coupon as displayed on screen 11 and the entry of its data into the merchant's system. This data is then further processed electronically by the merchant and/or the manufacturer and/or whoever is responsible for making coupon redemption payments to the merchant. This processing has no relevance to the present invention, other than to note that it involves no handling of paper coupons.

As shown in Fig. 1, a signal 2 is broadcast by encoded programming signal source 4. Signal 2 is received and re-transmitted as signal 6 by code re-transmission source 8. Signal 2 is a programming signal that has been combined with a coupon code signal. The coupon code signal is a predetermined code in digital or analog form. Signal 6 is the coupon code portion of signal 2. In accordance with the present invention, the coupon code signal 6 is detected by base unit 1 and suitably processed to generate corresponding coupon code display data. That coupon code display data is outputted by base unit 1 for transmission to and storage in the PDA 3.

More specifically, base unit 1 includes a_microphone 15 for detecting the coupon code in the above-described signal 6 which is emitted by the TV speaker (this being one embodiment of the re-transmission source 8) as an audio signal 6. Of course, microphone 15 would be replaced by another suitable detector, depending on the nature of the source 8 and the re-transmitted signal 6. The output of microphone 15 is received by coupon code detection circuit 17. For example, coupon code detection circuit 17 can be a digital device in which all of the possible coupon codes have been pre-stored. If circuit 17 finds a match between one of the pre-stored codes and the output signal of microphone 15, the output of coupon code detection circuit 17 is passed to coupon code memory 19. For example, coupon code memory 19 can be a first-in-first-out (FIFO) register.

The coupon code signal would typically be combined with a programming signal to inform the viewer of some information which may trigger a coupon-selection response. For example, the programming signal could be a commercial for a particular product. As the commercial is being shown, printed in a corner of the TV screen would be a statement that a coupon for this product is being offered. Alternatively, an indicator such as 105 in Fig. 4 could be activated. The viewer may choose to take advantage of this offer by selecting the coupon code which is at that instant stored in memory 19. This can be accomplished in a number of ways, including a button (not shown) provided for this purpose on base unit 1. However, it is more convenient for the viewer to utilize a remote control device, such as the TV's remote control unit 21. TV remote controls are a ubiquitous item in most households. By making a minor modification to the standard remote control (the standard components of which are not shown), a signal source 23 and control button 25 would be added. Signal source 23 can transmit any suitable signal, such as radio frequency or infrared. Thus, when the viewer sees a coupon being offered for a product which is desired, button 25 is pressed. Signal source 23 then transmits a selection signal 27. Selection signal 27 is picked up by detector 29 on base unit 1, and its corresponding output signal (also referred to herein as selection signal 27) is provided to selection signal detection circuit 31. Selection signal detection circuit 31 responds only to selection signal 27, and its resulting output signal 31a causes the memory 19 to "freeze" its contents for a designated period of time sufficient to have the coupon code data stored therein processed by the remaining circuitry of base unit 1, as described below. Output signal 31b of circuit 31 actuates coupon ID circuit 45, as explained below.

It is contemplated in accordance with a preferred embodiment of the present invention that base unit 1 will have pre-stored therein coupon data corresponding to a plurality of coupons. Such coupon data is stored in memory 33. Various ways readily occur as to how the coupon data can be inputted into memory 33. One convenient way is to download such data periodically from central processing station 34 using a telephone line (or its above-discussed alternatives). Base unit 1 has an input/output (I/O) circuit 37 for conducting the usual "handshaking" and to receive signal 35 on the phone line for input and storage in coupon data memory 33. The I/O circuit is a conventional, well-known component and, thus, it is deemed that no further details thereof are needed.

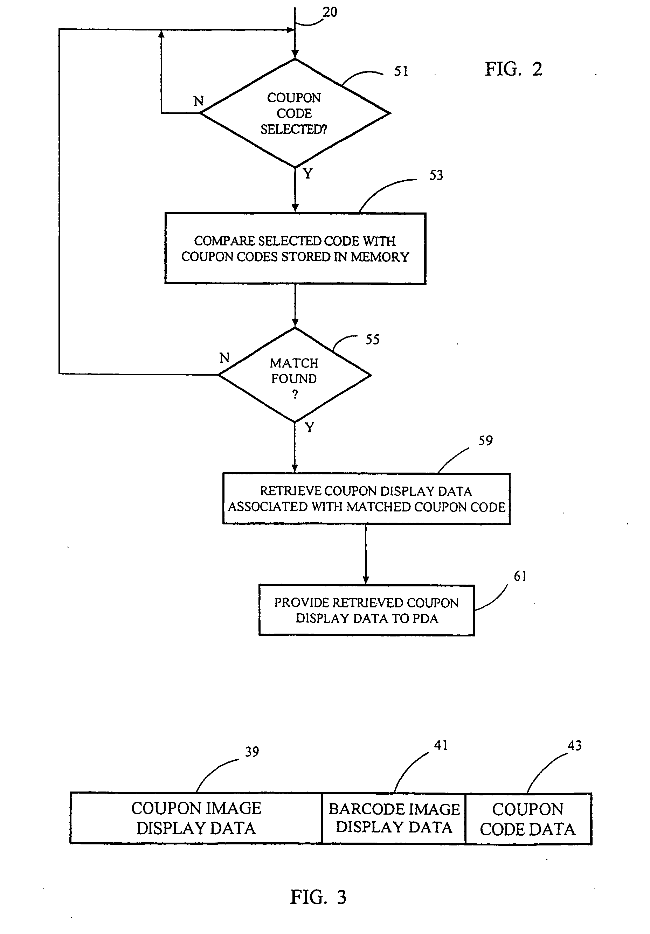

The coupon data stored in coupon data memory 33 is shown in Fig. 3. In particular, this coupon data has a coupon display data component and a coupon code data component. The coupon display data component includes coupon image display data 39 and barcode image display data 41. The remaining component is coupon code data 43 which is the same as the coupon code in signal 6. The coupon display data for each coupon is assigned a unique coupon code data 43.

The information stored in coupon data memory 33 is updated from central processing station 34 to provide data for an updated set of coupons in connection with scheduled programming for the next day. This updating task can be done during low-traffic usage of phone lines and computers, such as occurs at night. Of course, the nightly updating can also be performed at any other selected interval, such as weekly.

Thus, to briefly summarize, updated coupon display data for a set of coupons and their respectively associated unique coupon codes are pre-stored in coupon data memory 33. A specific coupon code is stored (i.e, "frozen" for a time) in coupon code memory 19 due to actuation by the viewer of control button 25 on remote control 21 as a result of a deliberate selection of a coupon related to, for example, a commercial being shown on TV. At this point, in response to output 31b of circuit 31, coupon identification (ID) circuit 45 in base unit 1 retrieves from memory 33 the coupon display data of the coupon corresponding to the coupon code stored in memory 19, and transmits it to PDA 3. The specifics of how this function is performed by circuit 45 will be described below in connection with Fig. 2.

In accordance with Fig. 2, the output 20 of coupon code memory 19 is monitored, and a determination is made, per step 51, regarding whether or not a signal on output 31a has been received. If not, then step 19 is periodically repeated. However, if step 51 determines that a signal on output 31a has been recieved, the stored coupon code is compared with the coupon code data 43 stored in coupon data memory 33 for the updated set of coupons that was downloaded from central processing station 34. If no match is found, then the sequence of steps returns to step 51.

If step 55 finds a match, then per step 59 the coupon ID circuit 45 sends a signal on output 45a to retrieve coupon image display data 39 and barcode image display data 41 (i.e., the coupon display data) that are associated with the matched coupon code 43. The retrieved coupon display data is then provided to PDA 3, per step 61. Transmitter 47 in base unit 1 and detector 49 in portable unit 3 are provided for this purpose.

In operation, an encoded programming signal 2 is transmitted from source 4, such as a television station, and received by a TV set in a viewer's home. Coded retransmission source 8 generates an audible coupon code signal 6 from signal 2. The audible coupon code signal is picked up by microphone 15 and inputted to coupon code detection circuit 17. If detection circuit 17 identifies one of the incoming signals from microphone 15 as a coupon code, that code is temporarily stored in coupon code memory 19.

The viewer, or consumer, is watching the programming that has been broadcast in combination with the coupon code. This may be a television commercial which includes some suitable indication notifying the consumer that an incentive reward coupon is being offered for the product being advertised. If the viewer is interested in obtaining such a coupon as an incentive for purchasing the product, button 25 on remote-control 21 is depressed to generate selection signal 27 with transmitter 23. Selection signal 27 is picked up by detector 29 on base unit 1 and inputted into selection signal detection circuit 31. In response to outputs from circuit 31, memory 19 "freezes" the code stored therein for a predetermined period of time and, during that period of time, coupon ID circuit 45 is actuated to compare the coupon code stored in memory 19 with the coupon codes 43 stored in coupon data memory 33. If a match is found, then the coupon display data corresponding to the matched coupon code in memory 33 is retrieved by circuit 45 and provided to PDA 3 via transmitter 47 and detector 49.

The coupon display data provided to PDA 3 is stored in coupon display data memory 5. Memory 5 has sufficient capacity to store coupon display data for several coupons. This enables the consumer to select several coupons for different products before making the next visit to the appropriate merchant. When the consumer wishes to redeem a coupon, display generating circuit 7 is activated with input device 9. Circuit 7 utilizes coupon image display data 39 stored in memory 5 to display that coupon's image on screen 11. Likewise, circuit 7 utilizes barcode image display data 41 to display the barcode on screen 11 with the coupon image. (See a discussion provided below for an alternative approach to display the barcode to prevent fraudulent use of the coupon.) The consumer can utilize scroll buttons, for example, provided in input device 9 to scroll through all the coupons stored in memory 5 in order to find the right one.

Once the desired coupon is displayed, the consumer hands PDA 3 to the cashier, or whoever is redeeming the coupons. The cashier can then process the displayed coupon in any one of several possible ways. For example, the barcode can be scanned. Alternatively, button 10 can be depressed to output signal 16 which causes I/R transmitter 13 to transmit the barcode to a suitable detector (not shown) provided in the store. Likewise, the cashier can manually enter into the merchant's system a unique coupon number that can be displayed on the screen which applies only to that coupon.

As can readily be appreciated from the above, the present invention makes it possible for the consumer to conveniently obtain coupons without the need for printed paper and which are likely to be redeemed at a high rate. Also, such coupons can be more conveniently processed by merchants. Thus, this type of incentive reward to consumers is handled in a more efficient and environmentally friendly manner.

Although the above-described invention is highly advantageous, as has been explained above, it may be vulnerable to abuse and fraud. It goes without saying that a coupon is intended to be redeemed only once. However, once a coupon is stored in PDA 3, it could conceivably be used repeatedly by simply accessing the coupon display data stored in memory 5. This is highly undesirable for whoever is conducting the incentive reward program because the details of such a program are designed by taking into account a loss of receipts calculated based on a predicted number of redeemed coupons. That loss could be far exceeded if the "same" coupon were to be repeatedly redeemed. Therefore, it is preferable to adapt the PDA so that the stored coupons can each be redeemed only once. The following alternatives are presented.

The simplest approach is to provide a control button 12 on PDA 3 which triggers an erase function when actuated. When PDA 3 is presented to the cashier with a coupon displayed thereon, and after the cashier processes the coupon to redeem it, the cashier depresses button 12 to erase that coupon display data from memory 5. In particular, memory control circuit 63 responds to signal 64, which is outputted in response to button 12 being depressed, by erasing the coupon display data being accessed at that time by circuit 7 to display the coupon. This implementation is quite straightforward and, therefore, details thereof are not deemed necessary. Although this approach is effective, some people may be technically capable of defeating it by deactivating button 12 or changing its function since button 12 is readily accessible by opening the case of PDA 3.

An alternate, more secure, approach is to use button 12 differently. More specifically, the scroll buttons on input device 9 are used to display an image of the desired coupon so the consumer can decide whether this is the coupon to be redeemed. However, no barcode is yet displayed (contrary to the embodiment described above). The barcode is required only for redeeming the coupon. Thus, it needs to be displayed only as the coupon is about to be processed for redemption. Prior to handing the PDA 3 to the cashier, the consumer depresses button 12 to display the barcode in accordance with signal 14. However, before the barcode is displayed, the PDA generates a warning notice on screen 11, in response to button 12 having been depressed, which reads: DISPLAYING THE BARCODE WILL RESULT IN DELETION OF THE COUPON FROM THIS PDA AFTER AN INTERVAL OF TWO MINUTES. DISPLAY BARCODE? If the consumer still wants to display the barcode, this can be done by depressing button 12 again. Then, in response to resultant signal 14, the barcode will be displayed for a predetermined period of time sufficient for it to be processed for redemption, such as two minutes. When the predetermined period of time expires, the coupon display data will be automatically erased from memory 5 by circuit 63 in response to signal 64.

In both approaches, circuit 63 erases the coupon. In the first approach, however, the erasure occurs upon button 12 being depressed by the cashier after the coupon has been redeemed. In the second approach, the erasure occurs automatically when button 12 is depressed twice in succession by the consumer to generate signal 14 for displaying the barcode. Signal 64 is also outputted by input device 9 upon a double clicking of button 12 to trigger a predetermined delay after which the coupon data is erased by circuit 63. Signals 14 and 64 could be the same signal.

The second approach is even more secure than the first because it cannot be defeated by deactivating button 12 since, if this is done, the barcode cannot be displayed. The function of button 12 must be left unchanged by the consumer so that it can trigger the display of the barcode and, therefore, after the predetermined period of time, button 12 also triggers the coupon's erasure. That functionality is designed into the circuitry which is much more difficult to access and modify than the buttons. This implementation is also quite straightforward and, therefore, details thereof are not deemed necessary.

An additional point of potential vulnerability occurs when the encoded programming signal 2 from source 4 is recorded, such as by a VCR. Of course, the taped signal would also include the coupon code. Thus, the consumer could play the tape and then "reload" into PDA 3 the same coupon that has just been redeemed (and which was erased in accordance with one of the above-described anti-fraud approaches) by depressing button 25 on remote 21, as described above. Such a repeated "reloading" of the coupon would defeat the anti-fraud erasure techniques described above. Consequently, circuit 63 of the PDA includes an internal timer (not shown), unrelated to the calendar date normally generated by the PDA which can be manipulated by the user. Circuit 63 includes a memory (not shown) that stores identifying information for all the coupons that were stored in memory 5 and which were redeemed. Circuit 3 receives such information from memory 5 as signal 68. Signal 68 can be the stored signal, and circuit 63 stores it as is, or suitably converts it, to obtain the identifying information. The identifying information is preferably related to the barcode or to the coupon code data. Use of the coupon code is advantageous because it is always used with this invention, whereas the use of a barcode is preferable but not essential. This advantage of relying on the coupon code is partly offset by the necessity to transmit it from base unit 1 to PDA 3 along with the coupon data. The advantage of relying on the barcode is that its data is available in the PDA anyway, but this is partly offset by the possibility that a barcode may not always be used with every coupon.

In any case, circuit 63 stores such identifying information of the redeemed coupons for a designated period of time, such as three months. If the consumer attempts to "reload" a redeemed coupon within this three month period, circuit 63 would block it from reaching memory 5. Thus, a particular coupon can only be "loaded" into PDA 3 once every three months. Once again, this implementation is quite straightforward and, therefore, details thereof are not deemed necessary.

PDA 3 is further provided with another advantageous feature by assigning a unique identification (ID) code to it which is stored in memory 65. This ID code for each PDA can be displayed on screen 11 and outputted by transmitter 13 as an extension of the coupon barcode. Thus, when the cashier scans the coupon barcode, the PDA ID code is scanned, stored and processed along with it. Likewise, the PDA ID code is transmitted along with the barcode, in response to signal 16, by transmitter 13.

Such a PDA ID code has many advantages. For example, it can be used for customer survey purposes. If the PDA is a device provided by a survey organization to selected individuals participating in a survey, then each particular PDA is "registered" to its user by storing the profile of that person, such as address, age, profession, income, interests, and so on. The redemption of a coupon by a person with such a PDA can then be correlated with that person's profile. Also, the PDA ID code can be used to track unauthorized use of coupons. If redemption of the same coupon occurs too frequently with the same PDA, then it is possible to readily uncover that situation because the unique PDA ID code clearly connects each coupon redemption with a particular PDA and, therefore, with its "registered" user.

Since presumably the encoded programming signal will be broadcast more than once and, thus, viewed more than once by a consumer, it is possible to "load" the PDA with each broadcast. Circuit 63 is, therefore, provided with a "lockout" capability that operates as follows. Circuit 63 compares incoming coupon display data with data stored in memory 5. If a match is found, the incoming coupon display data is locked out. This could be augmented with a timing aspect, namely that lockout would not occur if the coupon display data stored in memory 5 has been stored therein for longer than a required period, say one month. Thus, more than one of the same coupon could be stored in memory 5 if at least a predetermined interval has passed.

PDA 3 could also be provided with a stale coupon elimination function. Circuit 63 would automatically erase the coupon display data stored in memory 5 if it determines that more than a given period of time has passed since it was stored. Also, the coupon display data could include termination date data which circuit 63 would monitor and use to delete stale coupons whose termination date has expired.

Although a particular embodiment of the present invention has been described in detail above, various modifications thereto will be readily apparent to anyone with ordinary skill in the arts. For example, rather than storing coupons in memory 33 that have been obtained from central processing station 34, various other ways can be used to store a set of coupons. For example, an updated set can be obtained from an in-store terminal during each visit to the store. Also, the coupons could be used without a bar-code. In addition, the transfer of coupon data to the PDA could be done with a docking station rather than as wireless transmission. Base unit 1 would have a suitable receptacle with contacts to receive one end of PDA 3. The coupon data transfer could then be performed along with battery charging and other functions. One other modification is the elimination of base unit 1. Also, rather than transferring the coupon display data from base unit 1 to PDA 3, an alternative would be to pre-store the coupon display data for a plurality of coupons in the PDA. Each would have a unique activation code associated with it. Memory 33 would store only the activation codes in association with the coupon codes, respectively. Only the activation code corresponding to the selected coupon would be transmitted by base unit 1 to PDA 3. This requires transmission of less data, but also imposes more of a storage capacity on the PDA. One further modification is that all, or at least some, of the functions of base unit 1 could be built into PDA 3.

All these and other such modifications are intended to fall within the scope of the present invention.

Thus, while there have shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method for producing an electronic coupon, comprising:
providing a source for producing a coupon code signal corresponding to a reward coupon;
converting said coupon code signal to coupon display data; and
inputting the coupon display data to an electronic display device for displaying said reward coupon.

2. A method according claim 1, wherein said coupon display data comprises coupon image display data required for displaying an image of the coupon.

3. A method according claim 2, wherein said coupon display data comprises barcode image display data required for displaying a barcode corresponding to the coupon image then being displayed by said electronic display device.

4. A method according claim 3, further comprising the step of providing a signal for selective transmission thereof by a transmitting unit upon a particular coupon being displayed by said electronic display device, wherein said signal corresponds to the particular coupon.

5. A method according claim 1, wherein the step of providing a source for producing a coupon code signal comprises storing said coupon code signal in an electronic memory of a stationary base unit adapted to be operatively coupled to a portable unit that includes the electronic display device,
and wherein the step of converting said coupon code signal to said coupon display data comprises storing said coupon display data in an electronic memory of the stationary base unit so as to be retrievable, respectively, based on the coupon code signal.

6. A method according claim 1, wherein the step of providing a source for producing a coupon code signal comprises storing activation codes in an electronic memory of a stationary base unit adapted to be operatively coupled to a portable unit that includes the electronic display device, and
wherein the step of converting said coupon code signal to said coupon display data comprises storing said coupon display data in an electronic memory of the portable unit so as to be retrievable, respectively, based on said activation codes.

7. A method according claim 1, wherein the steps of providing a source for producing a coupon code signal corresponding to a reward coupon, converting said coupon code signal to coupon display data, and inputting the coupon display data to an electronic display device for displaying said reward coupon are performed with a portable unit.

8. A method according to one of the claims 1 to 7 for use by a consumer to redeem an electronic coupon in a store with a portable unit having an electronic memory, a display control circuit, and an electronic display device, comprising:
storing coupon display data, corresponding to at least one reward coupon, in the memory of the portable unit; and
actuating the display control circuit to retrieve said coupon display data from said memory and produce therewith an electronic display of a coupon on said electronic display device;
whereby said electronically displayed reward coupon is presented to a cashier at the store.

9. A method according to claim 8, wherein said storing step stores coupon display data corresponding to a plurality of reward coupons, and said actuating step comprises selecting a particular one from among said plurality of reward coupons for display and presentation to the cashier.

10. A method according to claim 8, wherein the step of storing coupon data comprises:
storing identifying information for coupons previously redeemed with the portable unit within a predetermined period of time; and
wherein the step of storing coupon display data in the memory of the portable unit is performed only if the coupon corresponding to said coupon display data does not match any of the coupons corresponding to said stored identifying information.

11. A method according to claim 8, further comprising:
storing an identification code in the memory of the portable unit, said identification code being unique to said portable unit; and
displaying on the electronic display device an image of the identification code upon a coupon being displayed thereon;
whereby said electronically displayed reward coupon and said electronically display image of the identification code are presented to a cashier at the store.

12. A method according to claim 8, further comprising:
storing an identification code in the memory of the portable unit, said identification code being unique to said portable unit; and
transmitting the identification code upon a coupon being displayed on the electronic display device;
whereby said electronically displayed reward coupon and said electronically displayed image of the identification code are presented to a cashier at the store.

13. A method according to claim 8, wherein the storing step comprises:
determining whether coupon display data for a particular coupon is stored in the memory of the portable unit; and
controlling whether coupon display data is stored in the memory based on whether such coupon display data corresponds to said particular coupon.

14. A method according to claim 13, wherein the controlling step blocks the storing step only if such coupon display data corresponds to said particular coupon.

15. A method according to claim 13, wherein the controlling step blocks said storing step only if such coupon display data corresponds to said particular coupon and said particular coupon was stored less than a predetermined time earlier.

16. A method according to one of the claims 1-15 for enabling a consumer to obtain a reward coupon upon a program that has been broadcast by a program signal source being performed by reproduction equipment, wherein the program signal source broadcasts a signal that is a combination of a programming signal corresponding to the program and a coupon code signal corresponding to the reward coupon, the method comprising:
detecting from said broadcast signal said coupon code signal,
producing coupon display data from said coupon code signal, and
inputting the coupon display data to an electronic display device.

17. A method according to claim 16, wherein the step of producing coupon display data from said coupon code signal comprises storing said coupon code signal in an electronic memory of a stationary base unit adapted to be operatively coupled to a portable unit that includes the electronic display device, and wherein the step of inputting said coupon display data to an electronic display device comprises storing said coupon display data in an electronic memory of the stationary base unit so as to be retrievable for display.

18. A method according to claim 16, wherein the step of producing coupon display data from said coupon code signal comprises storing activation codes in an electronic memory of a stationary base unit adapted to be operatively coupled to a portable unit that includes the electronic display device, and wherein the step of inputting said coupon display data to an electronic display device comprises storing said coupon display data in an electronic memory of the portable unit so as to be retrievable for display.

19. A method according to claim 16, wherein the detecting, producing and inputting steps are performed with a portable unit.

20. A method according to claim 16, wherein the step of producing code display data from said coupon code signal comprises:
detecting a selection signal actuated by the consumer during performance of the program by the reproduction equipment; and
storing in an electronic memory the coupon code signal corresponding to a portion of the program being performed when the selection signal was actuated by the consumer.

21. A method according to claim 21, further comprising providing an indication perceivable by the consumer whenever a program portion is being performed for which a reward coupon is made available and which the consumer can obtain by actuating, said selection signal.

22. A method according to one of the claims 16 to 21 for processing reward coupons brought by a consumer for redemption by a merchant, comprising:
storing coupon display data corresponding to the reward coupon in a memory device of a portable unit having an electronic display device;
retrieving the coupon display data from the memory device and displaying the reward coupon on the electronic display device; and
at the merchant's location, detecting the displayed reward coupon;
whereby the merchant redeems the displayed reward coupon.

23. A method according to claim 22, further comprising erasing the coupon display data from the memory device after the merchant redeems the coupon.

24. A method according to claim 23, wherein the step of erasing comprises actuating an erase button on the portable unit.

25. A method according to claim 23, wherein the step of erasing comprises automatically erasing the coupon display data after a predetermined time period elapses from when the reward coupon is displayed for redemption by the merchant.

26. A method according to one of the claims 1-25 preventing fraudulent redemption of electronically generated reward coupons stored in a memory device of a portable unit, comprising:
at the merchant's location, reproducing the stored reward coupon for detection by the merchant's redemption unit; and
erasing the reward coupon from the memory device after the reward coupon has been redeemed.
on the portable unit.

27. A method according to claim 26, wherein the step of erasing comprises automatically erasing the coupon display data after a predetermined time period elapses from when the reward coupon is displayed for redemption by the merchant.

28. Apparatus for producing an electronic coupon, comprising:
a signal source (4,8)for producing a coupon code signal corresponding to a reward coupon;
means (1) for converting said coupon code signal to coupon code display data; and
means (7) for inputting the coupon code display data to an electronic display device for displaying said reward coupon.

29. Apparatus according to claim 28, wherein said coupon display data comprises coupon image display data required for displaying an image of the coupon.

30. Apparatus according to claim 28, wherein said coupon display data comprises barcode image display data required for displaying a barcode corresponding to the coupon image then being displayed by said electronic display device (11).

31. Apparatus according to claim 30, further comprising means (13) for providing a signal for relative transmission thereof by a transmitting unit upon a particular coupon being displayed by said electronic display device, wherein said signal corresponds to the particular coupon.

32. Apparatus according to claim 28, wherein the signal source for producing a coupon code signal comprises means for storing said coupon code signal in an electronic memory (33) of a stationary base unit (1) adapted to be operatively coupled to a portable unit (3) that includes the electronic display device (11), and
wherein the means (1) for converting said coupon code signal to said coupon display data comprises means for storing said coupon display data in an electronic memory of the stationary base unit (1) so as to be retrievable, respectively, based on the coupon code signal.

33. Apparatus according to claim 28, wherein the signal source for producing a coupon code signal comprises means for storing activation codes in an electronic memory of a stationary base unit adapted to be operatively coupled to a portable unit that includes the electronic display device (11), and wherein the means for converting said coupon code signal to said coupon display data comprises means for storing said coupon display data in an electronic memory (5) of the portable unit (3) so as to be retrievable, respectively, based on said activation codes.

34. Apparatus according to claim 28, wherein the signal source for producing a coupon code signal corresponding to a reward coupon, the means for converting said coupon code signal to coupon display data, and the means for inputting the coupon display data to an electronic display device for displaying said reward coupon constitute a portable unit.

35. Apparatus according to one of the claims 28 to 34 for use by a consumer to redeem an electronic coupon in a store, comprising:
a portable unit (3) having an electronic memory (5), a display control circuit, and an electronic display device (11);
means (63) for storing coupon code display data in said memory corresponding to a reward coupon;
means (9) for actuating the display control circuit to retrieve said coupon code display data from said memory (5) and produce therewith an electronic display of said coupon on said electronic display device (11); and
means (13) for use by a cashier at the store to read said electronically displayed reward coupon.

36. Apparatus according to claim 35, wherein said means for storing stores coupon display data corresponding to a plurality of reward coupons, and said means (9) for actuating comprises means for selecting a particular one from among said plurality of reward coupons for display and presentation to the cashier.

37. Apparatus of claim 35, wherein the means for storing coupon data comprises:
means (5) for storing identifying information for coupons previously redeemed with the portable unit within a predetermined period of time; and
wherein the means for storing coupon display data in the memory (5) of the portable unit stores the coupon display data only if the coupon corresponding to said coupon display data des not match any of the coupons corresponding to said stored identifying information.

38. Apparatus of claim 35, further comprising:
means for storing an identification code in the memory (5) of the portable unit, said identification code being compared to said portable unit; and
means for displaying on the electronic display device (11) an image of the identification code upon a coupon being displayed thereon;
whereby said electronically displayed reward coupon and said electronically display image of the identification code are presented to a cashier at the store.

39. Apparatus according to claim 35, further comprising:
means (63) for storing an identification code in the memory of the portable unit (3), said identification code being unique to said portable unit; and
means (13) for transmitting the identification code upon a coupon being displayed on the electronic display device (11);
whereby said electronically transmitted reward coupon and said electronically transmitted image of the identification code are presented to a cashier at the store

40. Apparatus according to claim 35, wherein the means for storing comprises:
means for determining whether coupon display data for a particular coupon is stored in the memory of the portable unit; and
means for controlling whether coupon display data is stored in the memory (5) based on whether such coupon display data corresponds to said particular coupon.

41. Apparatus according to claim 40, wherein the means for controlling blocks said storing of said coupon display data only if such coupon display data corresponds to said particular coupon and said particular coupon was stored less than a predetermined time earlier.

42. Apparatus according to one of the claims 28 to 41 for enabling a consumer to obtain a reward coupon while a program that has been broadcast is being performed by reproduction equipment, comprising:
a program signal source for broadcasting a signal that is a combination of a programming signal corresponding to the program and a coupon code signal corresponding to the reward coupon,
means for detecting from said broadcast signal said coupon code signal,
means (15) )for producing code display data from said coupon code signal, and
means (47) for inputting the coupon code display data to an electronic display device for displaying said reward coupon.

43. Apparatus according to claim 42, wherein the means for producing coupon display data from said coupon code signal comprises means for storing said coupon code signal in an electronic memory (33) of a stationary base unit (1) adapted to be operatively coupled to a portable unit that includes the electronic display device, and wherein the means for inputting said coupon display data to an electronic display device comprises means for storing said coupon display data in an electronic memory (33) of the stationary base unit so as to be retrievable for display.

44. Apparatus according to claim 42, wherein the means for producing coupon display data from said coupon code signal comprises means for storing activation codes in an electronic memory of a stationary base unit (1) adapted to be operatively coupled to a portable unit that includes the electronic display device (11), and wherein the means for inputting said coupon display data to an electronic display device comprises storing said coupon display data in an electronic memory (5) of the portable unit (3) so as to be retrievable for display.

45. Apparatus according to claim 42, wherein the detecting means, producing means and inputting means constitute a portable unit.

46. Apparatus according to claim 42, wherein the means for producing code display data from said coupon code signal comprises:
means for detecting a selection signal actuated by the consumer during performance of the program by the reproduction equipment; and
means for storing in an electronic memory the coupon code signal corresponding to a portion of the program being performed when the selection signal was actuated by the consumer.

47. Apparatus according to claim 46, further comprising means for providing an indication perceivable by the consumer whenever a program portion is being performed for which a reward coupon is made available and which the consumer can obtain by actuating said selection signal.

48. Apparatus according to one of the claims 29 to 47 for processing reward coupons brought by a consumer for redemption by a merchant, comprising:
means for storing coupon display data corresponding to the reward coupon in a memory device (5) of a portable unit (3) having an electronic display device (11);
means for retrieving the coupon display data from the memory device (5) and displaying the reward coupon on the electronic display device(11); and
at the merchant's location, means for detecting the displayed reward coupon;
whereby the merchant redeems the displayed reward coupon.

49. Apparatus according to claim 48, further comprising means for providing a signal for selective transmission thereof by a transmitting unit upon a particular coupon being displayed by said electronic display device (11), wherein said signal corresponds to the particular coupon.

50. Apparatus according to claim 48, further comprising means for erasing the coupon display data from the memory device (5) after the merchant redeems the coupon.

51. Apparatus according to claim 50, wherein the means for erasing comprises means (9) for actuating an erase button on the portable unit (3).

52. Apparatus according to claim 50, wherein the means for erasing comprises means for automatically erasing the coupon display data after a predetermined time period elapses from when the reward coupon is displayed for redemption by the merchant.

53. Apparatus according to one of the claims 28 to 52 for preventing fraudulent redemption of electronically generated reward coupons stored in a memory device of a portable unit, comprising:
means at the merchant's location for reproducing the stored reward coupon for detection by the merchant's redemption unit; and
means for erasing the reward coupon from the memory device after the reward coupon has been redeemed.

54. Apparatus according to claim 53, wherein the means for erasing comprises means for automatically erasing the coupon display data after a predetermined time period elapses from when the reward coupon is displayed for redemption by the merchant.
